# NEW EUROPEAN PATENT SPECIFICATION

(11) **EP 0 573 290 B2**
(45) Date of publication and mention of the opposition decision: **26.06.2002**
(45) Mention of the grant of the patent: 19.08.1998
(21) Application number: 93304309.3
(22) Date of filing: 03.06.1993
(51) Int. Cl.: G11B 7/095

(54) **Tracking-servo-system controller in an optical-disk player**
Servosystem zur Steuerung der Spurnachführung in einem Plattenspieler für optische Wiedergabe
Servosystème de commande de suivi de piste dans un tourne-disques de reproduction optique

(30) Priority: 03.06.1992 JP 14258592
(43) Date of publication of application: 08.12.1993
(73) Proprietor: SHARP KABUSHIKI KAISHA, Osaka-shi, Osaka-fu 545-0013 (JP)
(72) Inventor: Nomura, Masaru, Tenri-shi, Nara 632 (JP)
(74) Representative: Brown, Kenneth Richard

(56) References cited:
- EP-A- 0 130 836
- DE-A- 3 443 606
- DE-A- 3 604 604
- DE-A- 3 607 637
- DE-C- 3 412 911
- US-A- 4 633 453
- US-A- 4 669 072
- "THE CIRCUITS AND FILTERS HANDBOOK", Wai-Kai Chen, USA 1995, pages 2161-2165

## Description

The present invention relates to a tracking-servo-system controller for controlling a tracking servo system to perform a pull-in operation in a stable manner in an optical-disk player which reads out information on disks such as magneto-optical disks.

In optical-disk players including magneto-optical disk recording and reproducing apparatuses, it is necessary to focus a spot of a light beam on the center of a target track on a disk in order to readout signals accurately. The optical-disk players are therefore provided with a tracking servo system which controls the position of a beam spot along a radial direction of the disk. The following description discusses such a tracking servo system.

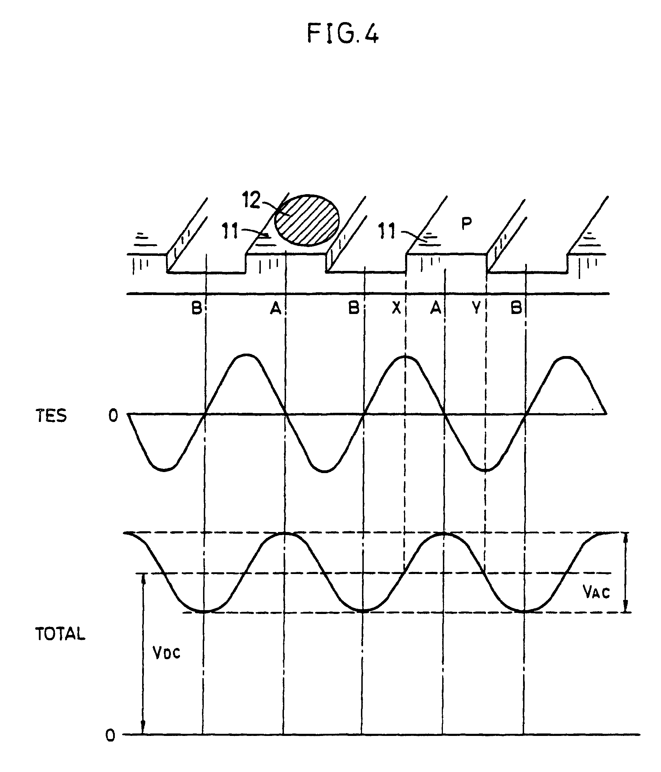

Fig. 4 illustrates the relationship between a tracking error signal (TES) and a reflected-light signal, i.e., a readout signal (TOTAL) which is the total of all outputs from, for example, a four-quadrant photodetector. The relationship corresponds to the positional relationship between a track 11 and a beam spot 12 on a magneto-optical disk.

When the beam spot 12 is on the center position A on the track 11 or on the center position B on a track adjacent to the track 11, a tracking error signal (TES) indicating zero is derived. The waveform of the tracking error signal (TES) is substantially sinusoidal. The waveform of the readout signal (TOTAL) is usually given by the waveform of an alternating-current component V_{AC} and the waveform of a direct-current component V_{DC} as an offset voltage added thereto. The altemating-current component V_{AC} has the maximum value when the beam spot 12 is on the center position A, while it has the minimum value when the beam spot 12 is on the center position B.

In general, when the beam spot 12 comes to the center position A on the track 11, the tracking servo system usually starts a pull-in operation. When the readout signal (TOTAL) is not less than the direct-current component V_{DC} and when the beam spot 12 comes to the center position A, the tracking error signal (TES) becomes zero. The tracking servo continues until the beam spot 12 is guided to a target position.

It is also possible to design a tracking servo system to start a pull-in operation when the beam spot 12 comes to a position (X or Y) some distance (for example, a quarter of the track pitch) away from the center position A of the track 11. Assuming that the track 11 to be followed is denoted as P, the tracking servo system starts the pull-in operation when the beam spot 12 comes to the position X or Y and the readout signal (TOTAL) exceeds the direct-current component V_{DC}. Such an arrangement reduces the time taken for positioning the beam spot 12 on an arbitrary track 11 on the disk after seeking the arbitrary track 11.

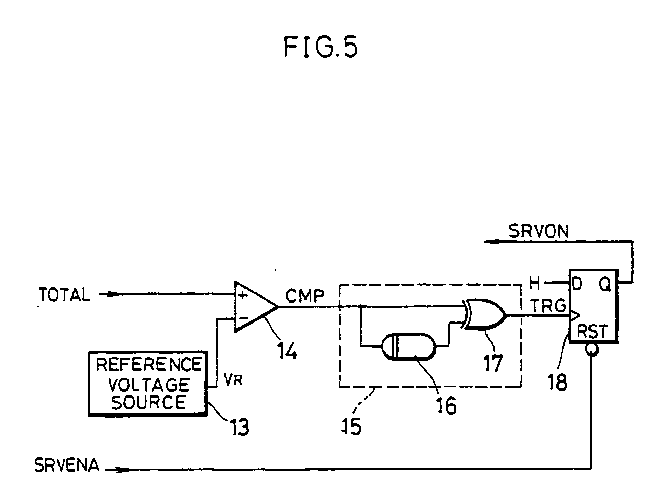

Fig. 5 shows a typical tracking-servo-system controller. In the tracking-servo-system controller, a comparator 14 compares the readout signal (TOTAL) with a reference voltage V_{R} generated by a reference voltage source 13. The value of the reference voltage V_{R} is usually equal to the direct-current component V_{DC}. The comparative output (CMP) of the comparator 14 becomes H level when TOTAL > V_{R}, and becomes L level otherwise.

A pulse generator 15 produces a trigger pulse (TRG) every time the comparative output (CMP) changes to H level or L level. The pulse (TRG) is the exclusive-or of the comparative output (CMP) and a delayed comparative output (CMP) from a delay element 16, and is transmitted through a gate 17 to a clock input terminal CK of a D flip-flop (D-FF) 18.

The D-FF 18 is triggered on the leading edge of the trigger pulse (TRG). A signal output from an output terminal Q of the D-FF 18 is sent as a servo control signal (SRVON) to a tracking servo system, not shown. A microcomputer, not shown, sends to a reset terminal RST of the D-FF 18 a signal (SRVENA) which enables the D-FF 18 to output the signal (SRVON).

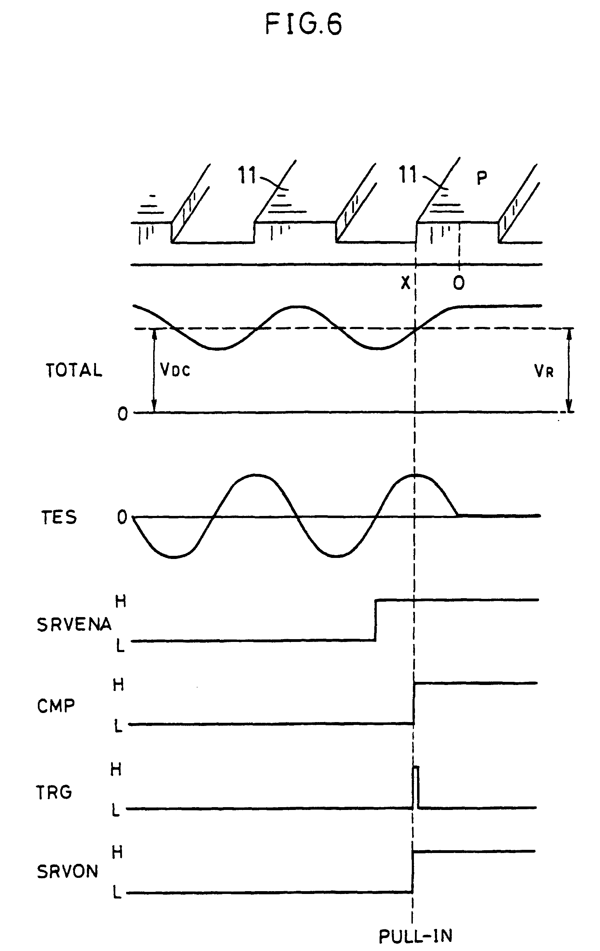

Fig. 6 shows some signals occurring in the tracking-servo-system controller as a function of time. When the signal (SRVENA) is L level, the D-FF 18 is in the reset state and the signal (SRVON) is also L level. When the signal (SRVENA) turns from L level to H level, the D-FF 18 is released from the reset state and the tracking servo system becomes ready to perform a pull-in operation.

Then, when the beam spot 12 moves from the central point O of the target track P to the position X located a quarter of the track pitch away from the central point O, TOTAL > V_{R} and the comparative output (CMP) of the comparator 14 rises from L level to H level. This causes the pulse generator 15 to output the trigger pulse (TRG). As a result, the signal (SRVON) of the D-FF 18 becomes H level and the tracking servo system starts the pull-in operation.

However, in the tracking-servo-system controller, when the reflectance varies between different disks, radial locations or rotation angles of a disk, the tracking servo system may fail to perform the pull-in operation at a desired time or become unable to perform the operation. This is because variations in the reflectance of the disk causes variations in the direct-current component V_{DC} of the readout signal (TOTAL) as described hereinafter.

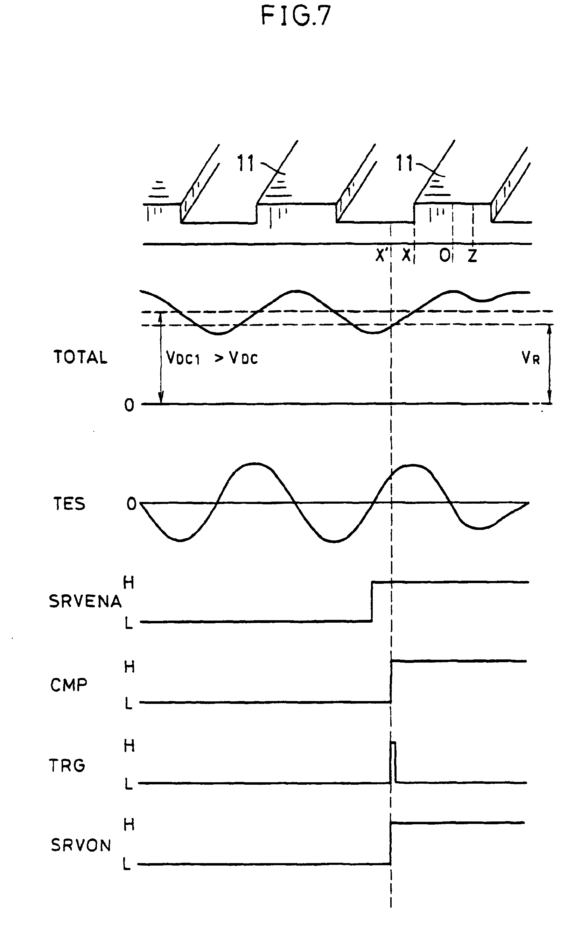

Fig. 7 shows some signals occurring in the tracking-servo-system controller as a function of time when the reflectance of the disk is high. In this case, the readout signal (TOTAL) has a higher direct-current component V_{DC1}. Therefore, the tracking servo system starts the pull-in operation at the position X' that is further away from the central point O of the track 11 than the position X is from the central point O. At this time, the beam spot, not shown, moves from the position X' through the positions X and central point O toward the position Z on the opposite side. Then, when the beam spot passes through the central point O, it is moved backward toward the position X to be positioned on the central point O. The pull-in operation is thus unstable, for example, it takes long time or fails.

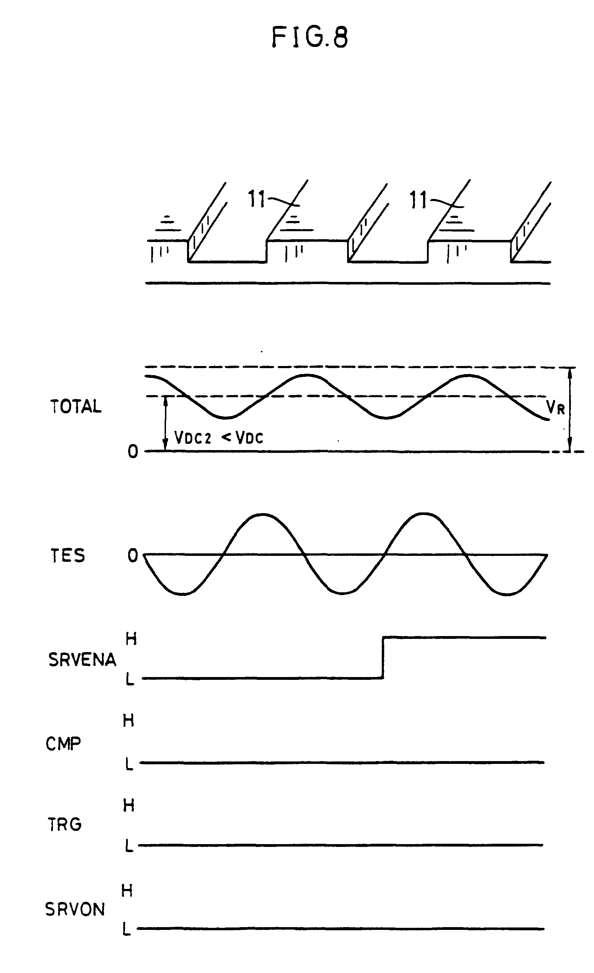

Fig. 8 shows some signals occurring in the tracking-servo-system controller when the reflectance of the disk is low. In this case, the readout signal (TOTAL) has a significantly lowered direct-current component V_{DC2}. Therefore, the maximum value of the readout signal (TOTAL) does not exceed the direct-current component V_{DC} nor TOTAL > V_{R}. Consequently, the tracking servo system is unable to start the pull-in operation.

In order to avoid such problems, it is necessary to control the reference voltage V_{R} in accordance with the variations in the reflectance of the disk or in the direct-current component V_{DC}. Accordingly, the tracking-servo-system controller is needed to include the reference voltage source 13 capable of controlling the reference voltage V_{R}.

For example, the reference voltage source 13 shown in Fig. 9 has a simplified structure. This reference voltage source 13 uses a low-pass filter to extract the direct-current component V_{DC} and a considerably low frequency component from the readout signal (TOTAL), and supplies the extract as the reference voltage V_{R}. Such a tracking-servo-system is disclosed in DE-A-3 604 604. On the other hand, the reference voltage source 13 shown in Fig. 10 has a rather complicated structure and performs digital processing. More specifically, an A/D convertor 20 first converts the readout signal (TOTAL) into digital form. Subsequently, the microcomputer 21 determines a direct-current component by calculating the average of the maximum and minimum values. Then, a D/A convertor 22 converts the direct-current component back into an analog voltage and supplies it as a reference voltage V_{R}.

Namely, in order to determine the correct moment to start the pull-in operation based on the readout signal (TOTAL) and the reference voltage V_{R}, it is necessary to provide the reference voltage source 13 for generating the reference voltage V_{R}. Consequently, the circuit structure of the tracking-servo-system controller becomes complicated to some extent.

An object of the present invention is to provide a tracking-servo-system controller which has a simplified structure but is capable of controlling a tracking servo system to perform a pull-in operation in a stable manner.

In order to achieve the above object, a tracking-servo-system controller in an optical-disk player is defined in claim 1.

With this configuration, if the high-pass means is arranged to suppress a direct-current component and a considerably low frequency component of the readout signal from a disk, it is possible to extract from the readout signal only an alternating-current component which is not affected by the variations in the reflectance. Then, when the zero-crossing detecting means detects a zero crossing on a change in the alternating-current component from a positive voltage to a negative voltage or vice versa, the pulse generating means outputs a pulse.

When the pulse is sent to the servo-control-signal generating means, the servo-control-signal generating means outputs a servo control signal. Namely, when the servo control signal is given, the tracking servo system starts the pull-in operation on the zero crossing, thereby improving the stability of the servo.

For a fuller understanding of the nature and advantages of the invention, reference should be made to the ensuing detailed description taken in conjunction with the accompanying drawings.

Fig. 1 is a circuit diagram illustrating a structure of a tracking-servo-system controller according to one embodiment of the present invention.

Fig. 2 is a waveform and timing chart of operations of the tracking-servo-system controller of Fig. 1.

Fig. 3 illustrates waveforms of the readout signal input to the tracking-servo-system controller of Fig. 1 and the alternating-current component extracted from the readout signal when the reflectance of the disk varies.

Fig. 4 is a view explaining the relationship between a tracking error signal and the readout signal corresponding to the positional relation between a track and a beam spot on the disk.

Fig. 5 is a view illustrating a structure of a conventional tracking-servo-system controller.

Fig. 6 is a waveform and timing chart of operations of the tracking-servo-system controller of Fig. 5.

Fig. 7 is a waveform and timing chart of operations of the tracking-servo-system controller of Fig. 5 when the reflectance of the disk is high.

Fig. 8 is a waveform and timing chart of operations of the tracking-servo-system controller of Fig. 5 when the reflectance of the disk is low.

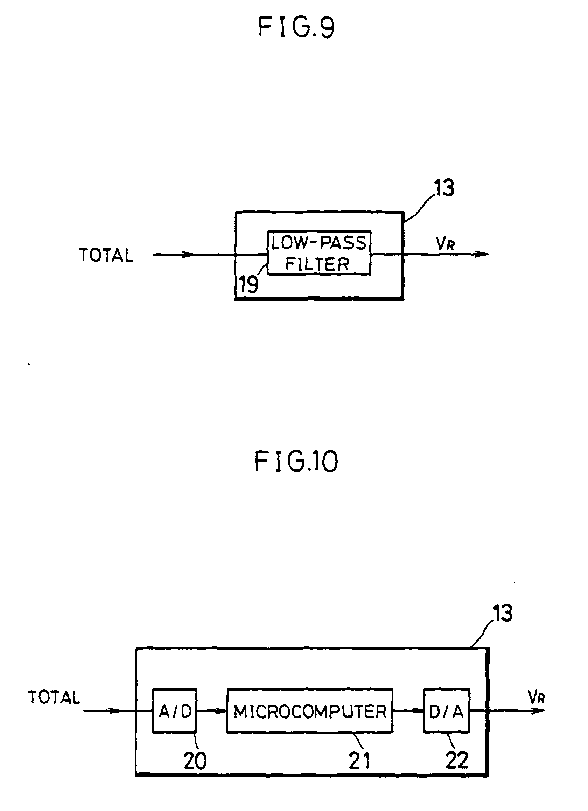

Fig. 9 is a block diagram illustrating a structure of a reference voltage source in the tracking-servo-system controller of Fig. 5.

Fig. 10 is a block diagram illustrating a structure of an alternative reference voltage source in the tracking-servo-system controller of Fig. 5.

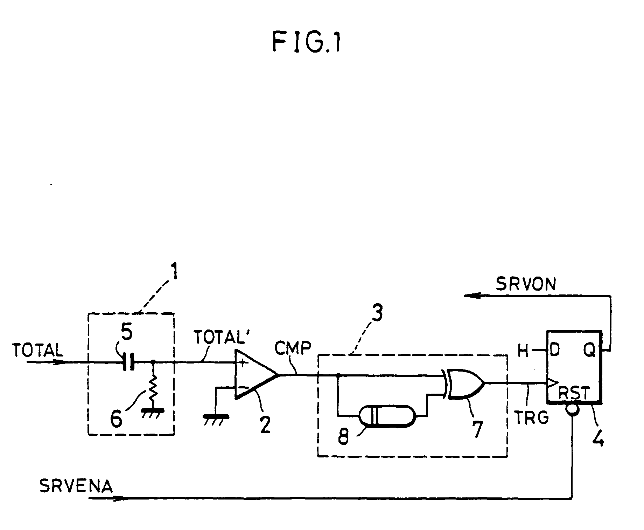

The following description discusses one embodiment of the present invention with reference to Figs. 1 through 3.

As illustrated in Fig. 1, a tracking-servo-system controller according to this embodiment includes a high-pass filter 1, a comparator 2, a pulse generator 3, and a D flip-flop (hereinafter referred to as D-FF) 4.

The high-pass filter 1 functioning as high-pass means is a primary filter composed of a condenser 5 and a resistor 6. The high-pass filter 1 suppresses a direct-current component and considerably low frequency components due to variations in the reflectance, and transmits other alternating-current component (TOTAL') of a readout or reflected-light signal (TOTAL).

The comparator 2 has a grounded negative input terminal, and a positive input terminal into which the alternating-current component (TOTAL') from the high-pass filter 1 is input. Thus, the comparator 2 functions as a zero-crossing comparator for comparing the alternating-current component (TOTAL') with zero volt.

The pulse generator 3 is constituted by a gate 7 and a delay element 8. In the pulse generator 3, the gate 7 outputs an exclusive-or of a comparative output (CMP) and a delayed comparative output (CMP) as a pulse (TRG). The delayed comparative output (CMP) is produced by delaying the comparative output (CMP) with the delay element 8. Namely, the pulse generator 3 produces a pulse (TRG) every time the comparative output (CMP) changes to H level or L level.

The D-FF 4 has a clock input terminal CK into which the trigger pulse (TRG) is input. The D-FF 4 is triggered on the leading edge of the trigger pulse (TRG ). An output signal from an output terminal Q of the D-FF 4 serves as a signal (SRVON) for starting a pull-in operation of a tracking servo system, not shown.

A microcomputer, not shown, sends to a reset terminal RST of the D-FF 4 a signal (SRVENA) for enabling outputting of the signal (SRVON). A data input terminal D of the D-FF 4 is set to H level.

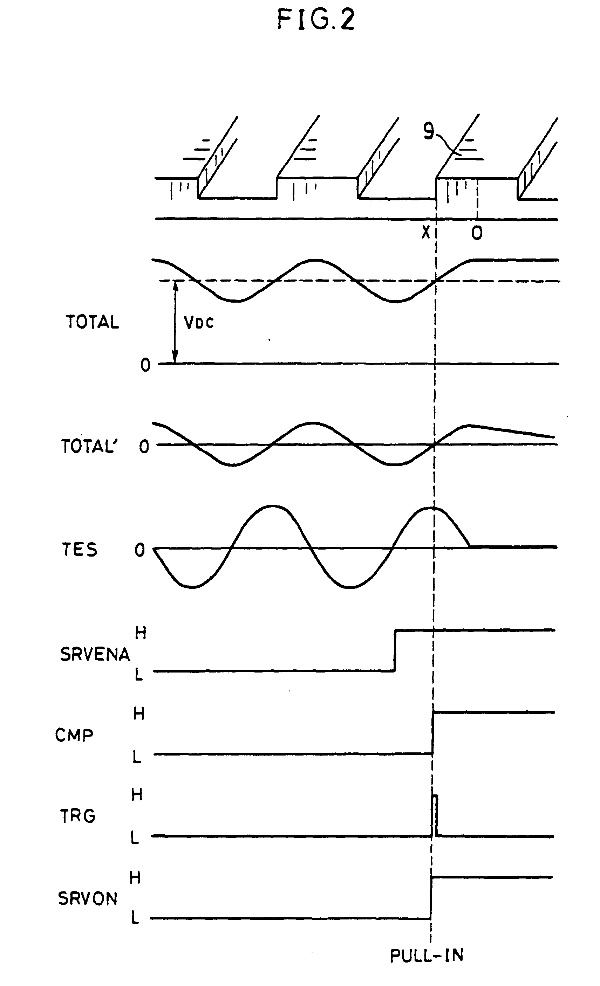

Fig. 2 shows operations of the tracking-servo-system controller having a structure of Fig. 1 as a function of time.

Since the high-pass filter 1 suppresses the direct-current component V_{DC} and considerably low frequency components resulted from the variations in the reflectance, and only the alternating-current component (TOTAL') of the readout signal (TOTAL) is transmitted. The altemating-current component (TOTAL') has the peak value in the positive direction when the readout signal (TOTAL) becomes maximum, while it has the peak value in the negative direction when the readout signal (TOTAL) becomes minimum.

Therefore, when the readout signal (TOTAL) crosses the direct-current component V_{DC}, i.e., when the beam spot is on the position X located a quarter of the track pitch away from the central point O of a target track 9, the alternating-current component (TOTAL') crosses zero volt. As a result, the comparative output (CMP) of the comparator 2 changes from L level to H level. Then, the pulse generator 3 outputs the trigger pulse (TRG) on the leading edge of the comparative output (CMP).

At this time, the signal (SRVENA) has already changed from L level to H level, and the signal (SRVON) is ready to be output. In this state, if the trigger pulse (TRG) is input into the D-FF 4, the output signal of the D-FF 4 changes from L level to H level on the leading edge of the trigger pulse (TRG). Namely, the tracking servo system starts the pull-in operation on a zero crossing of the altemating-current component (TOTAL').

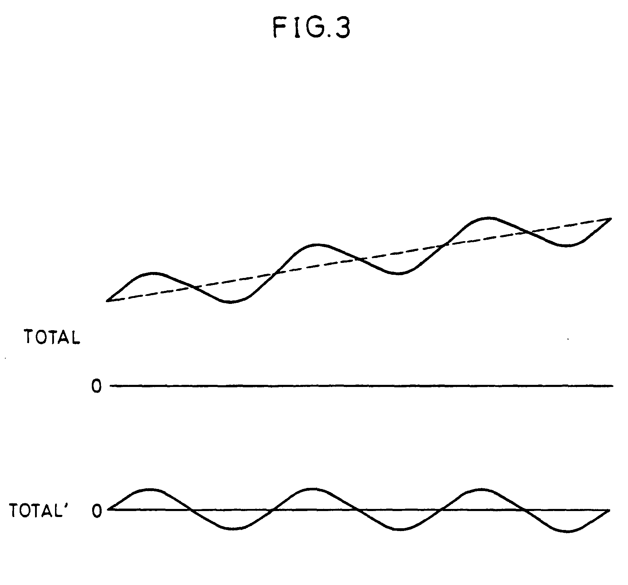

However, when the reflectance of a disk varies depending on radial locations and the turning angle of the disk, the readout signal (TOTAL) gradually increases as shown in Fig. 3, for example. On the contrary, the alternating-current component (TOTAL') from the high-pass filter 1 does not contain the direct-current component V_{DC} and considerably low frequency components re-suiting from the variations in the reflectance. Thus, the value of the alternating-current component (TOTAL') always varies around zero volt as shown in Fig. 3. Accordingly, there is no need to change the reference voltage to be input to the comparator 2 in accordance with the variation in the reflectance of the disk. In other words, the reference voltage is kept zero volt.

According to this embodiment, as described above, since the alternating-current component (TOTAL') is not affected by the variations in the reflectance of the disk, the stability of the servo is improved. With this arrangement, since there is no need to supply the reference voltage to the comparator 2, the reference voltage source is not required. Therefore, a tracking-servo-system controller with a simplified structure is achieved.

## Claims

1. A tracking-servo-system controller in an optical-disk player comprising:
high-pass means (1) including a high-pass filter arranged to receive a readout signal representing the intensity of light of a beam spot reflected from an optical disk, the signal having an AC component and a DC component, and for transmitting only a frequency component above a predetermined frequency band of the signal readout from the optical disk;
zero-crossing detecting means (2) for detecting a zero crossing of the frequency component extracted by said high-pass means (1) wherein said zero-crossing detecting means (2) includes a comparator for comparing the frequency component extracted by said high-pass means (1) with a reference voltage of zero volt;
pulse generating means (3) for outputting a pulse on the zero crossing detected by said zero-crossing detecting means (2); and
servo-control-signal generating means (4) for outputting a servo control signal when triggered by the pulse from said pulse generating means so as to cause said tracking servo system to start a pull-in operation.

2. The tracking-servo-system controller in an optical-disk player according to claim 1,
wherein said pulse generating means (3) includes:
a delay element (8) for delaying an output of said zero-crossing detecting means; and
a gate (7) for outputting an exclusive-or of the output of said zero-crossing detecting means (2) and an output from said delay element (8).

3. The tracking-servo-system controller in an optical-disk player according to claim 1,
wherein said servo-control-signal generating means (4) includes a D flip-flop into which the pulse from said pulse generating means (3) is input as a clock pulse.

4. The tracking-servo-system controller in an optical-disk player according to claim 3,
wherein said D flip-flop comprises a reset terminal into which an enabling signal for allowing outputting of the servo control signal is input.

## Patentansprüche

1. Spurregelungssystem-Steuerung für einen optischen Plattenspieler, mit:
- einer Hochpasseinrichtung (1) mit einem Hochpassfilter, das so ausgebildet ist, dass es ein die Strahlfleckintensität von an einer optischen Platte reflektiertem Licht repräsentierendes Signal empfängt, das über eine Wechsel- und eine Gleichspannungskomponente verfügt, und nur ein Frequenzkomponente über einem vorbestimmten Frequenzband des von der optischen Platte ausgelesenen Signals durchlässt;
- einer Nulldurchgangs-Erkennungseinrichtung (2) zum Erkennen eines Nulldurchgangs der durch die Hochpasseinrichtung (1) entnommenen Frequenzkomponente, die einen Komparator zum Vergleichen der durch die Hochpasseinrichtung (1) entnommenen Frequenzkomponente mit einer Bezugsspannung von null Volt aufweist;
- einer Impulserzeugungseinrichtung (3) zum Ausgeben eines Impulses bei einem durch die Nulldurchgangs-Erkennungseinrichtung (2) erkannten Nulldurchgang; und
- einer Regelungssignal-Erzeugungseinrichtung (4) zum Ausgeben eines Regelungssignals, wenn sie durch den Impuls von der Impulserzeugungseinrichtung getriggert wurde, um dafür zu sorgen, dass das Spurregelungssystem einen Einfangvorgang startet.

2. Spurregelungssystem-Steuerung -Steuerung nach Anspruch 1 für einen optischen Plattenspieler, bei der die Impulserzeugungseinrichtung (3) Folgendes aufweist:
- ein Verzögerungselement (8) zum Verzögern des Ausgangssignal der Nulldurchgangs-Erkennungseinrichtung und
- ein Gatter (7) zum Ausgeben eines Signals, das durch Exklusiv-oder-Verknüpfung des Ausgangssignals der Nulldurchgangs-Erkennungseinrichtung (2) und des Ausgangssignals des Verzögerungselements (8) erhalten wurde.

3. Spurregelungssystem-Steuerung nach Anspruch 1 für einen optischen Plattenspieler, bei der die Regelungssignal-Erzeugungseinrichtung (4) ein D-Flipflop aufweist, in das der Impuls von der Impulserzeugungseinrichtung (3) als Taktimpuls eingegeben wird.

4. Spurregelungssystem-Steuerung nach Anspruch 3 für einen optischen Plattenspieler, bei der das D-Flipflop einen Rücksetzeingang aufweist, in den ein Freigabesignal eingegeben wird, das die Ausgabe des Regelungssignals ermöglicht.

## Revendications

1. Dispositif de commande de servo-système de suivi de piste dans un lecteur de disques optiques, comprenant :
un moyen passe-haut (1) incluant un filtre passe-haut, conçu pour recevoir un signal de lecture représentant l'intensité de la lumière d'un spot de faisceau réfléchi par un disque optique, le signal ayant une composante alternative et une composante continue, et pour transmettre uniquement une composante de fréquence au-dessus d'une bande de fréquences prédéterminée du signal de lecture du disque optique ;
un moyen de détection de passage par zéro (2) pour détecter un passage par zéro de la composante de fréquence extraite par ledit moyen passe-haut (1)
dans lequel ledit moyen de détection de passage par zéro (2) comprend un comparateur servant à comparer la composante de fréquence extraite par ledit moyen passe-haut (1) à une tension de référence de zéro volt ;
un moyen de génération d'impulsions (3) pour délivrer en sortie une impulsion lors du passage par zéro détecté par ledit moyen de détection de passage par zéro (2) ; et
un moyen de génération de signal de servo-commande (4) pour délivrer en sortie un signal de servo-commande lorsqu'il est déclenché par l'impulsion délivrée par ledit moyen de génération d'impulsions de façon à faire en sorte que le servo-système de suivi de piste déclenche une opération d'appel.

2. Dispositif de commande de servo-système de suivi de piste selon la revendication 1,
dans lequel ledit moyen de génération d'impulsions (3) comprend :
un élément à retard (8) pour retarder une sortie dudit moyen de détection de passage par zéro ; et
une porte (7) pour délivrer en sortie une somme disjonctive de la sortie dudit moyen de détection de passage par zéro (2) et d'une sortie dudit élément à retard (8).

3. Dispositif de commande de servo-système de suivi de piste dans un lecteur de disques optiques selon la revendication 1,
dans lequel ledit moyen de génération de signal de servo-commande (4) comprend une bascule D à l'entrée de laquelle est appliquée, en tant qu'impulsion d'horloge, l'impulsion en provenance dudit moyen de génération d'impulsions (3).

4. Dispositif de commande de servo-système de suivi de piste dans un lecteur de disques optiques selon la revendication 3,
dans lequel ladite bascule D comprend une borne de remise à zéro à laquelle est appliqué un signal de validation autorisant la délivrance du signal de servo-commande.
